# EUROPÄISCHE PATENTSCHRIFT

(11) **EP 2 898 803 B1**
(45) Veröffentlichungstag und Bekanntmachung des Hinweises auf die Patenterteilung: **19.04.2017**
(21) Anmeldenummer: 15151820.6
(22) Anmeldetag: 20.01.2015
(51) Int. Cl.: A47J 31/46

(54) **Vorrichtung, insbesondere Kaffeemaschine, mit verbesserter Ausgabe**
Device, in particular a coffee machine, with enhanced dispensing
Dispositif, en particulier machine à café, à distribution améliorée

(30) Priorität: 23.01.2014 DE 102014201260
(43) Veröffentlichungstag der Anmeldung: 29.07.2015
(73) Patentinhaber: WMF Group GmbH, 73312 Geislingen/Steige (DE)
(72) Erfinder: Gussmann, Jochen, 73527 Schwäbisch Gmünd (DE); Marschalek, Klement, 73326 Deggingen (DE)
(74) Vertreter: Pfenning, Meinig & Partner mbB

(56) Entgegenhaltungen:
- EP-A1- 2 524 634
- EP-A1- 2 524 635
- DE-C1- 19 841 680
- DE-U1-202008 016 377
- GB-A- 2 139 481

## Beschreibung

Die vorliegende Erfindung bezieht sich auf eine Vorrichtung zum Zubereiten eines Getränks aus einem mit Wasser zu durchströmenden Stoff (insbesondere: Kaffeemehl), insbesondere auf eine elektrisch betriebene Kaffeemaschine. Die Vorrichtung bezieht sich darüber hinaus auf ein Brühverfahren mit einer entsprechenden Vorrichtung.

Die EP 2 524 634 A1 betrifft einen Getränkeautomaten insbesondere einen Kaffeeautomaten, mit einem von einem Leitungsanschluss oder einem Tank durch einen Boiler zu einer Ausgabestelle führenden Hauptstrompfad, wobei
- der Boiler über eine ein Ventil aufweisende Leitung mit dem Tank, einer Tropfschale, einem Ablauf oder einer Ausgabestelle verbunden ist,
- das Ventil bei einem sich im Stand-by-Zustand befindlichen Boiler zumindest teilweise geöffnet ist, wodurch ein druckloses, offenes Boilersystem vorliegt,
- eine das Ventil betätigende Steuereinrichtung vorgesehen ist, die derart ausgebildet ist, dass sie das Ventil schließt, sofern eine Anforderung vorliegt.

Heutige Kaffeevollautomaten sind in der Lage, eine große Anzahl verschiedener Getränkeprodukte herzustellen: beispielsweise Espresso, Kaffee Creme, Brühkaffee, Cappuccino, Latte Macchiato, heiße Schokolade und Teewasser. Am häufigsten erfolgen Espresso- oder Kaffee Creme-Brühungen, die mit hohem Brühdruck und mit kleinen bis mittleren Durchflussraten durchgeführt werden. Einen geringeren Anteil nehmen die Produkte Brühkaffee, heiße Schokolade oder Teewasserausgabe ein. Diese Produkte werden bei geringem Druck und bei hohen Flussraten hergestellt. Ebenfalls werden bei der Reinigung oder Entkalkung einer solchen Maschine im Vergleich zu den Getränken größere Mengen an Wasser bei niedrigem Druck benötigt.

Um die Anforderung hoher Druck bei niedriger Fördermenge einerseits und niedriger Druck bei hoher Fördermenge andererseits in ein und derselben Vorrichtung zu erreichen, werden teure Flügelzellenpumpen verwendet, die beide Kriterien erfüllen, da diese Pumpen eine hohe Förderleistung erbringen, unabhängig davon, ob ein hoher oder ein niedriger Druck benötigt wird. Günstigere Schwingankerpumpen haben demgegenüber den Nachteil, dass sie bei Anwendungen mit niedrigem Druck in der Fördermenge nicht ausreichen. Aus dem Stand der Technik ist somit der Einsatz teurer Pumpentechnik, mit der sowohl hoher Druck bei niedriger Fördermenge als auch niedriger Druck bei hoher Fördermenge optimal erreicht werden kann, oder der Einsatz günstiger Pumpentechnik, bei der jedoch ein Kompromiss bei der Förderleistung bei niedrigem Druck notwendig ist, bekannt.

Ausgehend vom Stand der Technik ist es die Aufgabe der vorliegenden Erfindung, eine Vorrichtung zum Zubereiten eines Getränks, insbesondere eine Kaffeemaschine, zur Verfügung zu stellen, die die Nachteile des Standes der Technik vermeidet, die also eine verbesserte Ausgabe ermöglicht. Insbesondere ist es die Aufgabe, eine Vorrichtung zur Verfügung zu stellen, die auf preisgünstige Art und Weise sowohl die Anforderung hoher Druck bei niedrigen Fördermengen als auch die Anforderung niedriger Druck bei hohen Fördermengen erfüllt. Aufgabe ist es darüber hinaus, ein entsprechendes Brühverfahren in einer Kaffeemaschine zur Verfügung zu stellen.

Die Aufgabe wird durch eine Vorrichtung gemäß Anspruch 1 gelöst, wobei die abhängigen Ansprüche vorteilhafte Ausführungsformen derselben zeigen. Ein erfindungsgemäßes Brühverfahren setzt dabei die in Anspruch 1 beschriebene Vorrichtung ein.

Nachfolgend wird die Erfindung zunächst allgemein, dann anhand von Ausführungsbeispielen beschrieben. Die in den einzelnen Ausführungsbeispielen in Kombination miteinander realisierten Merkmale müssen im Rahmen der Erfindung nicht in den in den Ausführungsbeispielen gezeigten Kombinationen verwirklicht werden: einzelne Merkmale können auch weggelassen werden oder mit Merkmalen anderer Ausführungsbeispiele kombiniert werden. Bereits einzelne der gezeigten Merkmale der Ausführungsbeispiele können für sich eine Verbesserung des Standes der Technik darstellen.

Eine erfindungsgemäße Vorrichtung lässt sich Anspruch 1 entnehmen.

Bei einer solchen Vorrichtung kann es sich um eine Espresso-Maschine oder einen Kaffeevollautomaten handeln. Die Vorrichtung kann sowohl zur Heißbrühung (dann weist die Vorrichtung einen geeigneten Heißwassererzeuger auf) als auch für eine Kaltbrühung, d.h. Kalteextraktion, geeignet sein. Grundsätzlich kann ein solcher Heißwassererzeuger auch weggelassen werden, so dass die Vorrichtung lediglich für die Kaltbrühung geeignet ist. Der Begriff der Brühkammer ist im Rahmen der vorliegenden Erfindung somit bezüglich der Temperatur des zum Durchströmen des Stoffes (insbesondere: Kaffeemehls) verwendeten Wassers nicht einschränkend.

Der Aufbau einer Brüheinheit und die Integration derselben in eine Vorrichtung wie die erfindungsgemäße Vorrichtung ist dem Fachmann grundsätzlich bekannt, siehe hier beispielsweise die in der EP 2 055 214 B1 beschriebene Brüheinheit, die erfindungsgemäß verwendet werden kann. Erfindungsgemäß können als Fördereinrichtung insbesondere vergleichsweise günstige Schwingankerpumpen eingesetzt werden, wobei gemäß der Erfindung gerade auch mit diesen sowohl hohe Drücke bei niedriger Fördermenge als auch niedrige Drücke bei hoher Fördermenge erzielt werden können. Grundsätzlich ist es jedoch ebenso möglich, die (teureren) Flügelzellenpumpen und nicht nur Schwingankerpumpen als Fördereinrichtung der vorliegenden Erfindung einzusetzen.

Vorzugsweise erfolgt die Wasserzufuhr vom Wasserzulauf über dessen zweiten Wasserpfad in die Brüheinheit ohne Zwischenschaltung einer Fördereinrichtung: Der zweite Wasserpfad weist somit keine Fördereinrichtung auf (z. B. durch Umgehung der Fördereinrichtung im ersten Wasserpfad mittels eines Bypasses).

Als Durchflussmengenregler gemäß Anspruch 1 kann dabei insbesondere ein elektromagnetisches Ventil eingesetzt werden. In einer vereinfachten Variante lässt sich als Durchflussmengenregler jedoch auch ein Rückschlagventil einsetzen.

Weitere erfindungsgemäß realisierbare Merkmale lassen sich dem abhängigen Anspruch 2 entnehmen.

Der erste Wasserpfad und der zweite Wasserpfad bilden in dieser Konfiguration parallele Pfade, d.h. der zweite Wasserpfad (in dem der Durchflussmengenregler angeordnet ist, vgl. Anspruch 2) bildet so einen zum ersten Wasserpfad parallelen Bypass.

Weitere vorteilhafterweise realisierbare Merkmale lassen sich dem abhängigen Anspruch 3 entnehmen.

Dabei kann der Wasserzulauf so ausgebildet sein, dass die beiden Wasserpfade mit Wasser aus dem externen Wasserleitungssystem versorgt werden (insbesondere in der Konfiguration nach Anspruch 2, in der ein sich verzweigender Wasserzulauf, also ein Bypass, dem von genau einem Anschluss des externen Wasserleitungssystems Wasser zugeführt wird, vorliegt). Ebenso ist es jedoch möglich, den Wasserzulauf so auszubilden, dass nur der zweite Wasserpfad, nicht aber der erste Wasserpfad an das externe Wasserleitungssystem zum Zuführen von Wasser unter Druck angeschlossen wird. Der erste Wasserpfad kann dann beispielsweise an ein externes, befüllbares Wasserreservoir anschließbar sein. In diesem Fall hat der Wasserzulauf zwei separate Anschlüsse zum Einleiten von Wasser.

Ebenso ist es denkbar, den Wasserzulauf bzw. dessen ersten und zweiten Wasserpfad mit Wasser unter Druck nicht aus einem externen Wasserleitungssystem zu versorgen, sondern den Wasserzulauf bzw. dessen beide Pfade aus einem externen Wasserreservoir, das den Wasserdruck selbst zu erzeugen vermag, zu versorgen. Bei einem solchen Wasserreservoir kann es sich im einfachsten Fall um ein Wasserbehältnis, in dem eine größere Wassermenge über Kopf gelagert ist, handeln. Ebenso kann es sich dabei um ein Wasserbehältnis handeln, das seinerseits mit einer Wasserpumpe versehen ist, mit der das Wasser des Behältnisses in den Wasserzulauf bzw. in die beiden Wasserpfade desselben gefördert werden kann.

Weitere vorteilhafterweise realisierbare Merkmale lassen sich den abhängigen Ansprüchen 4 und 5 entnehmen.

Gemäß Anspruch 5 kann das Umschalten vorzugsweise mittels der Fördereinrichtung und/oder mittels eines/des Durchflussmengenreglers erfolgen. Zum Festlegen des Zeitpunktes des Umschaltens bzw. des Beginns eines Umschaltvorgangs kann beispielsweise das Signal eines/des Durchflussmengenmessers (vgl. hier auch Anspruch 4 verwendet werden, siehe auch nachfolgende Ausführungsbeispiele. Dabei muss das Umschalten nicht zu einem einzigen Zeitpunkt erfolgen, sondern kann sich zeitlich über ein Zeitintervall erstrecken und mehrere einzelne Vorgänge umfassen: Beispielsweise kann von einer ausschließlichen Wasserführung im zweiten Wasserpfad auf eine ausschließliche Wasserführung im ersten Wasserpfad umgeschaltet werden, indem bei zunächst reinem Druckbetrieb alleine über den zweiten Wasserpfad (bei abgeschalteter Fördereinrichtung im ersten Wasserpfad, so dass im ersten Wasserpfad kein Wasserfluss stattfindet) zuerst ein Zuschalten der Fördereinrichtung im ersten Wasserpfad erfolgt. Nach einem definierten

Zeitintervall (Anlaufphase der Fördereinrichtung, insbesondere der Pumpe) erfolgt ein Schließen des Durchflussmengenreglers im zweiten Wasserpfad (vgl. Anspruch 2), so dass ein Betrieb ausschließlich über die Fördereinrichtung im ersten Wasserpfad erfolgt.

Erfindungsgemäß ist es somit möglich, Wasser ausschließlich vermittels des in genau einem der beiden Pfade herrschenden bzw. erzeugten Drucks in die Brüheinheit und durch den darin befindlichen Stoff (Kaffeemehl) zu leiten oder auch den durch die beiden Pfade gemeinsam aufgebauten bzw. aufgebrachten Druck zum Erzeugen des Brühdrucks in der Brüheinheit bzw. der Brühkammer derselben zu nutzen.

Weitere vorteilhafterweise realisierbare Merkmale lassen sich den abhängigen Ansprüchen 6 bis 9 entnehmen.

Gemäß der Ansprüche 7 und 9 kann eine Mikroprozessor-basierte Steuereinrichtung (Mikro-Controller) vorgesehen sein, um die Kennlinie(n) der Fördereinrichtung und/oder die Brühdruckverlaufskurve(n) in einem Speicher derselben zu hinterlegen. Vorzugsweise werden für unterschiedliche Getränkeprodukte (wie Kaffee Creme, Brühkaffee, Cappuccino, ...) unterschiedliche Brühdruckverlaufskurven hinterlegt. Der Zeitpunkt des Umschaltens (bzw. der Beginn eines Umschaltvorgangs für den Wasserfluss im ersten, im zweiten oder im ersten und im zweiten Wasserpfad kann dann anhand einer Brühdruckverlaufskurve vordefiniert und im Speicher der Steuereinrichtung der Vorrichtung hinterlegt werden. Je nach Getränkeprodukt können somit unterschiedliche Umschaltzeitpunkte für den Wasserfluss vordefiniert und hinterlegt werden. Durch die Steuereinrichtung der Vorrichtung kann die Umschaltung automatisch zu dem für das angewählte Getränkeprodukt hinterlegten Umschaltzeitpunkt durch eine geeignete Ansteuerung der beiden Wasserpfade erfolgen (insbesondere der Fördereinrichtung und/oder des Durchflussmengenreglers in denselben).

Erfindungsgemäß kann beim Anschluss des Wasserzulaufs (oder des zweiten Wasserpfads desselben) an das externe Wasserleitungssystem im Wasserzulauf (bzw. in dessen zweitem Wasserpfad) ein Druckminderer vorgesehen sein, der einen höheren Eingangswasserdruck auf einen vordefinierten, konstanten Druck (von beispielsweise 2 bar) im Wasserzulauf bzw. im zweiten Wasserpfad desselben herabmindert.

Vorteilhafterweise ist zwischen dem Wasserzulauf (bzw. der Vereinigung des ersten und des zweiten Wasserpfades desselben) einerseits und der Brüheinheit andererseits ein (für Kaltgetränke abschaltbarer) Heißwassererzeuger vorgesehen, um das der Vorrichtung zugeführte Wasser zu erhitzen. Bei einem solchen kann es sich um einen Boiler, einen Durchlauferhitzer oder einen Thermoblock (wie sie aus dem Stand der Technik bekannt sind) handeln.

Bei einem erfindungsgemäßen Brühverfahren wird der Vorrichtung über den Wasserzulauf Wasser zugeführt. Das Wasser wird wahlweise über den ersten Wasserpfad, den zweiten Wasserpfad oder beide Wasserpfade geleitet, bevor es gegebenenfalls zunächst in den Heißwassererzeuger und anschließend in die Brühkammer der Brüheinheit fließt, wo es den Stoff (Kaffeemehl) durchströmt und über einen Auslass der Vorrichtung in ein externes Gefäß (z.B. Tasse) abgegeben wird.

Erfindungsgemäß ist somit der Einsatz einer günstigen Schwingankerpumpe als Fördereinrichtung im ersten Wasserpfad möglich, die durch den zweiten Wasserpfad mit Leitungsdruck für eine hohe Förderleistung bei niedrigem Druck unterstützt wird. Ein zweiter Wasserpfad, der mit einem Ventil versehen sein kann und mit Leitungsdruck beaufschlagbar ist, kann somit parallel zum ersten Wasserpfad (Pumpenpfad) vorgesehen sein. Es ist somit ein reiner Pumpenbetrieb, ein Pumpenbetrieb bei parallelem, d.h. gleichzeitig erfolgendem Wasserfluss im zweiten Wasserpfad, oder ein reiner Wasserfluss nur im zweiten Wasserpfad (bei abgeschalteter Pumpe) ausschließlich über den Leitungsdruck möglich.

Beispiele für eine erfindungsgemäße Wasserflusssteuerung im Wasserzulauf sind wie folgt:
- Herstellen von Espresso: Wasserfluss ausschließlich über ersten Wasserpfad (Pumpenpfad).
- Herstellen von Kaffee Creme: Wasserfluss sowohl im ersten als auch im zweiten Wasserpfad.
- Herstellen von Brühkaffee: Wasserfluss ausschließlich im zweiten, druckbeaufschlagten Wasserpfad.
- Reinigen der Vorrichtung: sämtliche Wasserflussmöglichkeiten können angewählt werden.

Bei der Brüheinheit kann es sich um eine aus einem unteren Kolben, einem Brühzylinder und einem oberen Kolben bestehende Brüheinheit handeln (siehe beispielsweise EP 2 055 214 B1). Als Heißwassererzeuger kann ein Boiler oder auch ein Durchlauferhitzer eingesetzt werden. Auch der Einsatz eines Thermoblockes ist möglich. Während des Brühvorgangs kann der Wasserfluss von Heißwasser zur Getränkeherstellung über ein elektromagnetisches Ventil als Durchflussmengenregler im zweiten Wasserpfad geschaltet werden. Das den Wasserzulauf (bzw. die beiden Pfade desselben) verlassende Heißwasser wird zur Brüheinheit geführt. Optional ist es auch möglich, dieses Wasser nicht zur Brüheinheit, sondern direkt in eine Heißwasserausgabe der Vorrichtung oder auch zu einem Mixersystem für Getränkepulver (Schokoladenpulver, Milchpulver, ...) zu führen. Solche Mixersysteme können in die erfindungsgemäße Vorrichtung integriert werden. Siehe hierzu den in der EP 2 046 172 B1 dargestellten Aufbau. Insbesondere benötigen solche Mixersysteme in der Regel größere Flussmengen bei geringem Druck, so dass hier eine geeignete erfindungsgemäße Wasserflussregelung bzw. Umschaltung genutzt werden kann.

Eine erfindungsgemäße Kaffeemaschine kann zum Anschluss an das Hauswassernetz bei einem Eingangswasserdruck von mehr als 2 und bis zu 6 bar ausgebildet sein. In der Maschine kann ein Druckminderer im Wassereinlauf bzw. Wasserzulauf eingebaut sein, so dass in der Maschine im Wasserzulauf derselben ein konstanter Druck von 2 bar erreicht werden kann. Durch diesen konstanten Druck ergibt sich eine gleichmäßige Wasserflussgeschwindigkeit aus den verwendeten Leitungsquerschnitten sowie den Eigenschaften des Kaffeemehls (das als Blende wirkt) und ggfs. auch durch eine sogenannte Brühblende, die bei vielen Kaffeemaschinen am Brüherabgang sitzt.

Zum Beginn einer erfindungsgemäßen Brühung können das Leitungssystem (umfassend den Wasserzulauf) der Vorrichtung sowie die Brühkammer der Vorrichtung befüllt werden. Hierdurch kann zunächst der Druckaufbau über die Fördereinrichtung verzögert werden. Diese Verzögerung kann durch zusätzliches Zuschalten des zweiten, druckbehafteten Wasserpfades zum ersten Wasserpfad der Fördereinrichtung in der Anfangsphase (Anlaufen der Pumpe) ausgeglichen werden.

Gegenüber den aus dem Stand der Technik bekannten Vorrichtungen hat die vorliegende Erfindung insbesondere die folgenden Vorteile:
- Erfindungsgemäß lassen sich statt teurer Flügelzellenpumpen günstige Schwingankerpumpen als Fördereinrichtung der Vorrichtung einsetzen. Die mit diesen in der Regel verbundenen Nachteile des Einbruchs der Fördermenge bei niedrigem Druck können kompensiert werden.
- Erfindungsgemäß kann eine Kompensation des Pumpenanlaufs bzw. des verzögernden Druckaufbaus der Pumpe erfolgen.
- Erfindungsgemäß lässt sich durch unterschiedliche Druckverläufe (durch Zu- und Wegschalten des druckbehafteten, zweiten Wasserpfades) bei der Brühung eine verbesserte Crema und eine verbesserte Kaffeequalität erzielen.

- Die Erfindung erfordert einen vergleichsweise geringen Umsetzungsaufwand, da in ihrer Grundkonfiguration lediglich eine weitere, parallele Leitung sowie ggfs. auch ein Ventil (Magnetventil oder auch Rückschlagventil) in dieser vorzusehen sind.
- Die Erfindung führt zu einem Zeitgewinn bei Vorgängen bei der Reinigung oder der Entkalkung.

Nachfolgend werden Ausführungsbeispiele zur Erfindung beschrieben.

Dabei zeigen:
Figur 1 einen ersten erfindungsgemäßen Kaffeevollautomaten (von dem - dies gilt auch für die nachfolgenden Ausführungsbeispiele - nur die für die vorliegende Erfindung wesentlichen Merkmale bzw. Bauelemente gezeigt sind).
Figur 2 einen zweiten erfindungsgemäßen Vollautomaten.
Figur 3 einen dritten erfindungsgemäßen Vollautomaten.
Figur 4 eine erste Möglichkeit der Drucksteuerung bzw. eine erste Möglichkeit erfindungsgemäßer Umschaltungen des Wasserflusses (Druckumschaltungen).
Figur 5 eine zweite erfindungsgemäße Möglichkeit von Druckumschaltungen.
Figur 6 ein weiteres Beispiel für solche Druckumschaltungen.

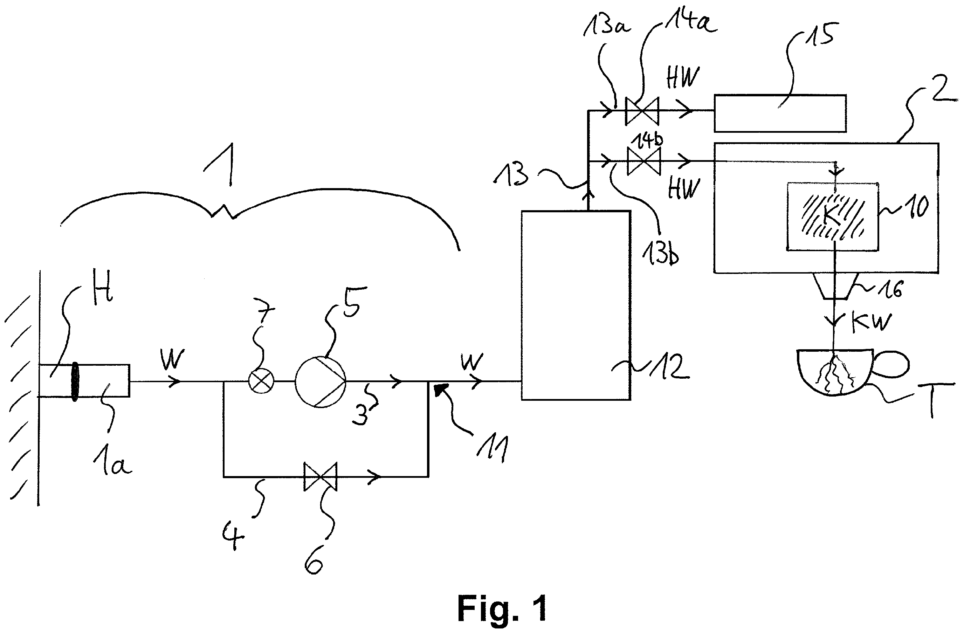

Der erfindungsgemäße Kaffeevollautomat gemäß Figur 1 weist einen einzigen Kaltwasseranschluss 1a auf, der zum Anschluss an ein Hauswassernetz H mit einem Eingangswasserdruck von 2 bis 6 bar ausgebildet ist. Der Anschluss 1a ist Teil des Wasserzulaufs 1 des Vollautomaten, wobei der Wasserzulauf 1 die nachfolgend noch näher beschriebenen Komponenten 3 bis 7 sowie 11 umfasst und das über den Anschluss 1a eingeleitete Wasser W aus dem Hauswassernetz H dem Durchlauferhitzer (Heißwassererzeuger) 12 des Vollautomaten zuleitet.

Stromabwärts des Anschlusses 1a verzweigt sich der Wasserzulauf 1 in einen ersten Wasserpfad 3, in dem in Flussrichtung des Wassers W gesehen zunächst ein Durchflussmengenmesser 7 und stromabwärts desselben eine Schwingankerpumpe 5 zur Wasserdurchleitung vorgesehen sind, und in einen zweiten Wasserpfad 4, in dem ein elektromagnetisches Absperrventil 6 vorgesehen ist. Stromabwärts der Pumpe 5 und des Ventils 6 vereinigen sich die beiden Pfade 3, 4 über ein einfaches T-Leitungsstück 11 in einem zum zuschaltbaren Heißwassererzeuger 12 führenden Leitungsabschnitt.

Das Wasser aus dem ersten Pfad 3, dem zweiten Pfad 4 oder aus beiden Pfaden 3, 4 (je nach Schaltung des Ventils 6) wird bei angeschaltetem Heißwassererzeuger 12 erhitzt. Das den Heißwassererzeuger 12 verlassende Heißwasser HW wird über die Ausleitung 13 des Heißwassererzeugers 12 wahlweise (gesteuert über die Absperrventile 14a, 14b) in einen ersten Auslasspfad 13a oder in einen zweiten Auslasspfad 13b geleitet. Im ersten Auslasspfad ist ein Absperrventil 14a und stromabwärts desselben eine hier nicht näher beschriebene Heißwasserausgabe 15 des Vollautomaten angeordnet. Im zweiten Auslasspfad 13b ist das Absperrventil 14b und stromabwärts desselben die Brüheinheit 2 des Vollautomaten ausgebildet. Durch die hier nicht gezeigte Steuereinrichtung (Mikro-Controller) des Vollautomaten kann je nach Getränkewahl entweder das Heißwasser HW über den ersten Auslasspfad 13a abgeführt werden oder über den zweiten Auslasspfad 13b, also über die Brüheinheit 2, die darin befindliche Brühkammer 10 (die mit Kaffeemehl K befüllt ist), und den Auslass 16 der Brüheinheit 2 als aufgebrühter Kaffee KW in ein externes Gefäß (Tasse T) abgeleitet werden.

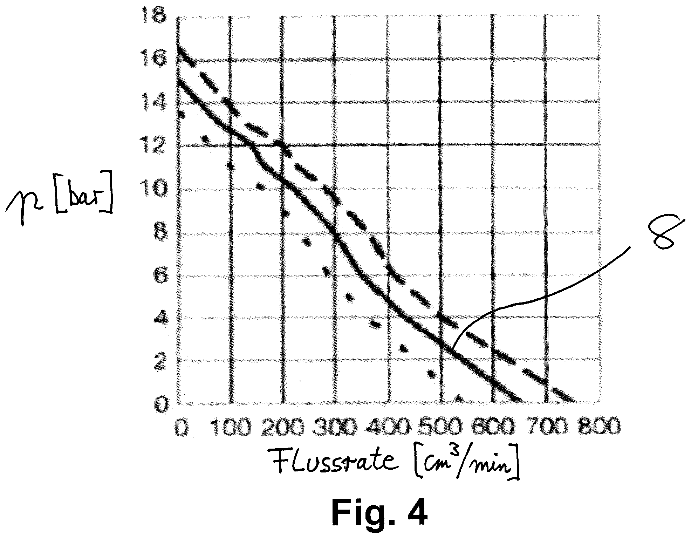

Mit der (nicht gezeigten) Steuereinrichtung der Vorrichtung wird der Wasserfluss im ersten Pfad 3 und/oder im zweiten Pfad 4 durch Ansteuern der Schwingankerpumpe 5 und des elektromagnetischen Ventils 6 gesteuert. Hierzu sind mehrere unterschiedliche Wasserflusssteuertechniken in den Vollautomaten (bzw. die Steuereinrichtung desselben) implementiert, die teilweise die der Steuereinrichtung durch den Durchflussmengenmesser 7 übermittelten Durchflussmengen pro Zeiteinheit (im ersten Wasserpfad 3) heranziehen. Siehe hierzu nachfolgende Beschreibung zu den Figuren 4 bis 6.

Die Ansteuerung der Elemente 5, 6 durch die Steuereinrichtung sowie die Übermittlung der Signale des Messers 7 an die Steuereinrichtung sind hier ebenfalls nicht gezeigt.

Die zu den nachfolgenden Figuren 4 bis 6 beschriebenen Umschaltvorgänge für den Wasserfluss durch die beiden Pfade 3, 4 lassen sich insbesondere durch die Schaltung des elektromagnetischen Ventils 6 im Bypass-Pfad (Pfad 4) zum ersten Wasserpfad 3 realisieren. Die gezeigte Ausführungsform hat insbesondere den Vorteil, dass jederzeit die parallele Wasserführung durch den Bypass-Pfad 4 mittels des elektromagnetischen Ventils 6 zu und wieder weg geschaltet werden kann und dass zusätzlich die Pumpe 5 geschaltet werden kann, so dass sich eine umfangreiche Kontrolle der Wasserflussführung durch die beiden Pfade 3, 4 ergibt.

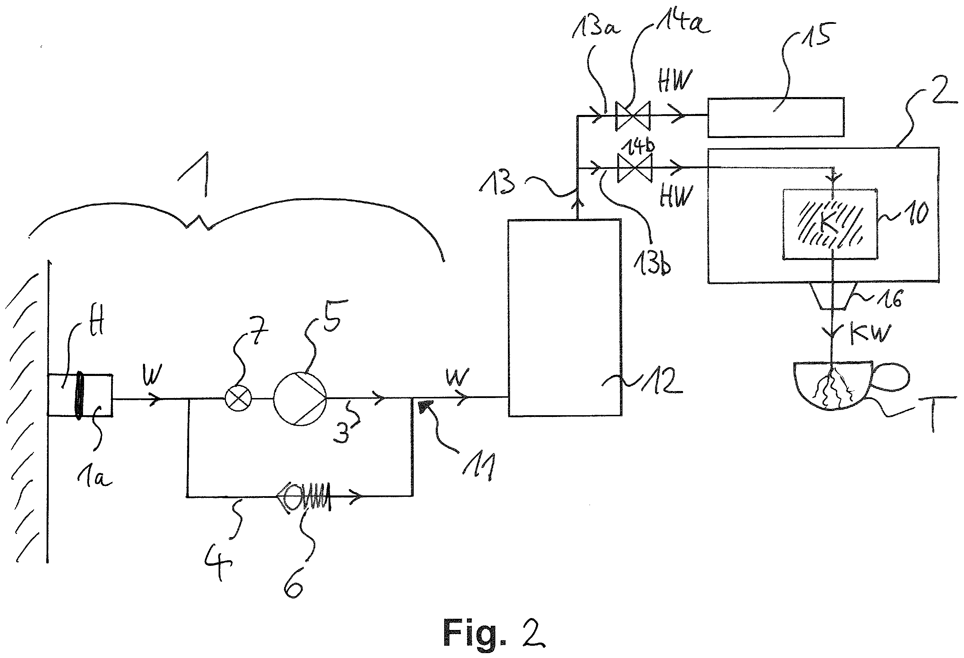

Figur 2 zeigt ein zweites Ausführungsbeispiel eines erfindungsgemäßen Vollautomaten, der grundsätzlich wie der in Figur 1 gezeigte aufgebaut ist, mit dem einzigen Unterschied, dass statt des (kostenintensiven) elektromagnetischen Ventils im Bypass-Pfad 4 ein einfaches Rückschlagventil 6 (mit Öffnungsrichtung zum Heißwassererzeuger 12 hin) vorgesehen ist. Identische Bezugszeichen bezeichnen somit identische bzw. sich entsprechende Bauelemente wie bei Figur 1. Fällt der Druck der Schwingankerpumpe 5 unter einen vorbestimmten, durch das Hauswassernetz über den Anschluss 1a vorgegebenen Druck (von beispielsweise 2.0 bar) ab, so öffnet sich das Rückschlagventil 6 über den Leitungsdruck des Hauswassernetzes H. Steigt der durch die Pumpe 5 erzeugte Druck über den vorbestimmten Druck (also beispielsweise über 2.0 bar), so wird das Rückschlagventil 6 von diesem aufgrund der gezeigten Bypass-Konstruktion der beiden Pfade 3, 4 wieder geschlossen.

Die in Figur 2 gezeigte Variante hat gegenüber der in Figur 1 gezeigten Variante den Vorteil einer preisgünstigeren Herstellung, jedoch auch den Nachteil, dass beispielsweise bei Spül-, Reinigungs- oder Entkalkungsvorgängen die Pumpe 5 und/oder der zweite Wasserpfad 4 nicht mehr beliebig geschaltet bzw. hinzugeschaltet werden können.

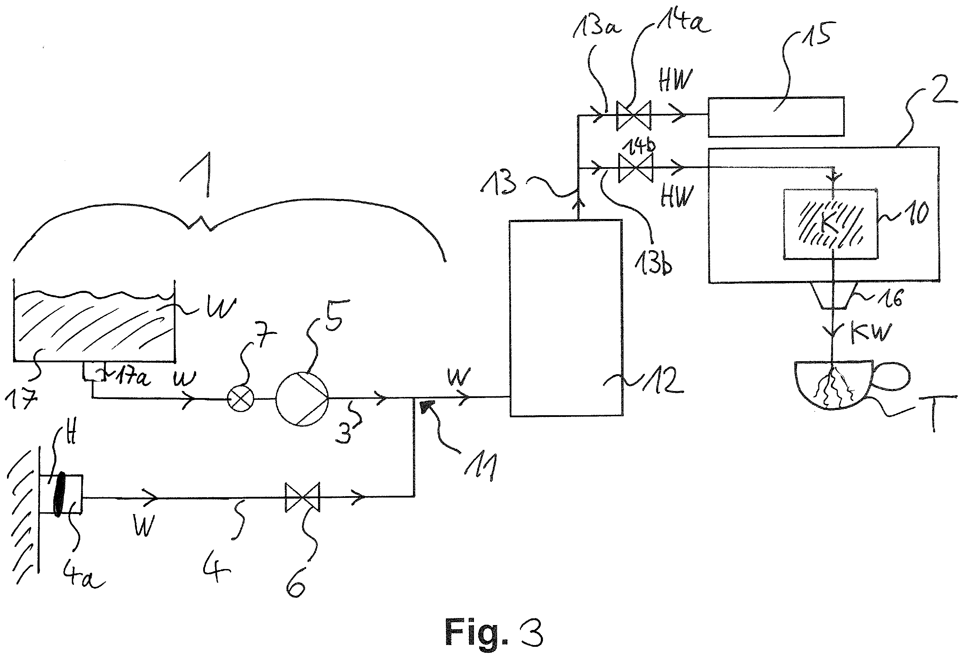

Figur 3 zeigt einen weiteren erfindungsgemäßen Vollautomaten und dass die Wasserzufuhr über den Wasserzulauf 1 erfindungsgemäß auch auf andere Art und Weise erfolgen kann. Auch dieser Vollautomat ist grundsätzlich wie in Figur 1 gezeigt aufgebaut, so dass nachfolgend nur die Unterschiede beschrieben werden.

Stromaufwärts des Durchflussmengenmessers 7 ist der erste Wasserpfad 3 des Wasserzulaufs 1 über einen Anschluss 17a mit einem externen, mit Wasser W befüllten Wasserreservoir in Form eines Containers 17 verbunden. Der Container 17 ist außerhalb des hier nicht gezeigten Gehäuses des Vollautomaten positioniert. Damit ist eine Wasserzufuhr über den Anschluss 17a in den ersten Wasserpfad 3 möglich. Container 17 und Anschluss 17a bilden hier ebenfalls Bauelemente des Wasserzulaufs 1. Alternativ dazu (nicht gezeigt) kann der Vollautomat jedoch auch so ausgebildet sein, dass er anstelle des Containers einen in das Gehäuse des Vollautomaten integrierten, zum Befüllen mit Wasser entnehmbaren Wassertank aufweist.

Stromaufwärts des elektromagnetischen Ventils 6 ist der zweite Wasserpfad 4 über einen weiteren Wasseranschluss 4a mit dem Hauswassernetz H zum druckbeaufschlagten Zuführen von Wasser W in den Wasserzulauf 1 über dessen zweiten Wasserpfad 4 verbunden. Auch der Anschluss 4a des zweiten Wasserpfades 4 ist somit ein Bauelement des Wasserzulaufs 1.

Im gezeigten Wasserzulauf 1 entfallen somit der Anschluss 1a sowie die stromaufwärts der Elemente 6, 7 angeordnete, T-förmige Verzweigung des Wasserzulaufs 1, wie sie in Figur 1 gezeigt sind. Stattdessen wird Wasser aus unterschiedlichen Quellen 17, H jeweils druckbehaftet über unterschiedliche Anschlüsse 4a, 17a des Wasserzulaufs 1 in letzteren eingeleitet.

Die Steuerung des Wasserflusses in den beiden Wasserpfaden 3, 4 kann bei der in Figur 3 gezeigten Variante (ebenso wie bei den Varianten der Figuren 1 und 2) wie nachfolgend zu den Figuren 4 bis 6 beschrieben erfolgen.

Bei den in Figuren 1 und 2 gezeigten Varianten kann die Anordnung des Durchflussmengenmessers 7 (statt im ersten Pfad 3 stromabwärts der T-förmigen Verzweigung nach dem Anschluss 1a in die beiden Pfade 3,4) auch unmittelbar nach dem Anschluss 1a, also stromaufwärts der Verzweigung des Wasserzulaufs 1 in seine beiden Pfade 3, 4 erfolgen (hier nicht gezeigt). In diesem Fall erfasst der Durchflussmengenmesser die gesamte, durch den Wasserzulauf 1 geleitete Wassermenge, wohingegen in den Figuren 1 und 2 lediglich die durch den ersten Wasserpfad 3 durchgeleitete Wassermenge erfasst wird. In der Regel bedeutet dies für die Ansteuerung der Vorrichtung nur einen geringen Unterschied, da die durch das Ventil 6 geleitete Wassermenge in der Regel bekannt ist (wenn das Ventil voll geöffnet ist), da die Leitungsquerschnitte bekannt sind und da der vom Hauswassernetz H gelieferte Ausgangsdruck (von beispielsweise 2.0 bar) aufgrund des hier nicht gezeigten Druckminderers im Wasserzulauf 1 ebenso bekannt ist.

Figur 4 zeigt eine Möglichkeit der erfindungsgemäßen Steuerung des Wasserflusses wie sie in den drei in den Figuren 1 bis 3 gezeigten Ausführungsbeispielen realisiert werden kann. Die Figur zeigt eine Kennlinie 8 der Fördereinrichtung 5, die den Zusammenhang zwischen der geförderten Wassermenge pro Zeiteinheit einerseits (Flussrate) und dem von der Fördereinrichtung 5 aufgebrachten Förderdruck p andererseits kennzeichnet. Diese Herstellerpumpenkennlinie 8 ist bekannt und in dem Speicher der Steuereinrichtung der Vorrichtung hinterlegt.

Auf Basis des Signals des Durchflussmengenmessers 7 kann mit der hinterlegten Herstellerpumpenkennlinie 8 gemäß Figur 4 die Umschaltung des Wasserflusses zwischen den beiden Wasserpfaden 3, 4 beispielsweise wie folgt bestimmt werden: Zunächst erfolgt ein Wasserfluss ausschließlich durch den ersten Wasserpfad 3, also über die Pumpe 5. Wird nun durch den Getränkewahlschalter (nicht gezeigt) der Vorrichtung ein Getränk gewählt, bei dem eine hohe Durchflussmenge bei geringem Druck benötigt wird (beispielsweise beim Herstellen von Brühkaffee) und stellt der Durchflussmengenmesser 7 fest, dass aufgrund der Schwingpumpeneigenschaft die Pumpe bei der Fördermenge einbricht (also die Fördermenge pro Zeiteinheit durch den ersten Pfad 3 unter einen vorbestimmten Wert abfällt), so wird über die Steuereinrichtung das elektromagnetische Ventil 6 geöffnet und der Bypasspfad 4 damit zugeschaltet. Der Wasserdruck des Wasserleitungssystems H wirkt somit unterstützend, so dass durch den kombinierten Wasserzufluss über die beiden Pfade 3 und 4 eine gegenüber dem Wasserzufluss ausschließlich über die Pumpe 5 erhöhte Förderleistung erzielt werden kann. Die in Figur 4 gezeigte Kennlinie 8 beschreibt dabei die Fördermenge bzw. Flussrate der Schwingankerpumpe 5 in cm³/min bei unterschiedlichem Druck p in bar. Die gestrichelten Linien zeigen die min. und max. Pumpenkennlinien (Toleranz) die durch die Exemplarstreuung bei einer Serienfertigung entstehen.

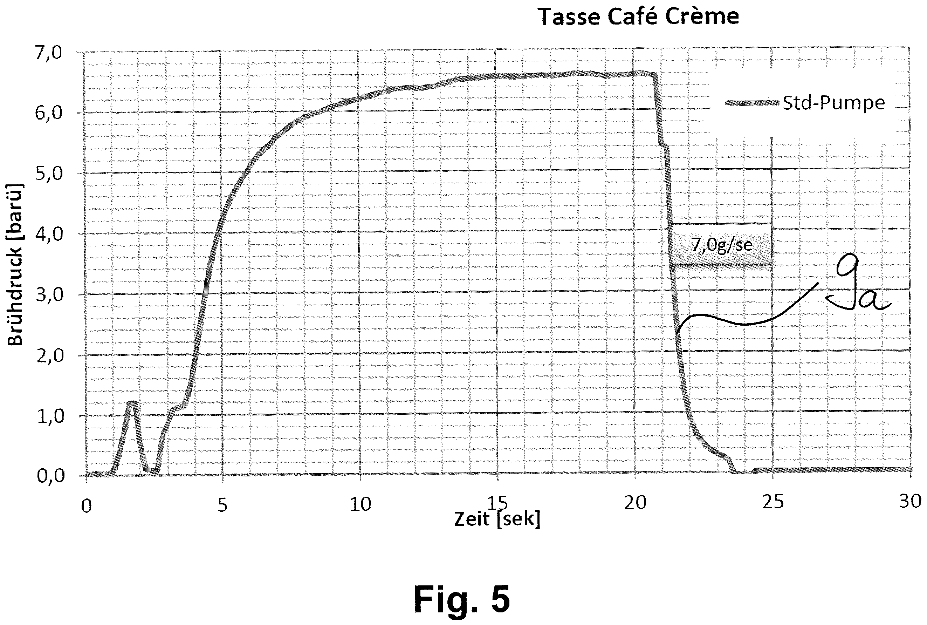

Figur 5 zeigt, wie bei den in Figuren 1 bis 3 gezeigten Vollautomaten eine Steuerung des Wasserflusses in dem Wasserzulauf 1 bzw. den Wasserpfaden 3, 4 desselben (also ein Umschalten zwischen den Pfaden) auf Basis von Brühdruckverlaufskurven, die abhängig vom jeweils gewählten Getränk ausgewählt werden und im Speicher der Steuereinrichtung des Vollautomaten hinterlegt sind, erfolgen kann.

Durch Messungen sind die optimalen Druckverlaufskurven über die Zeit zu verschiedenen Getränkeprodukten bekannt. Eine solche Brühdruckverlaufskurve für eine Tasse Kaffee Creme ist in Figur 5 gezeigt (Abhängigkeit des Brühdrucks in bar Überdruck über der Zeit in Sekunden, vgl. die Verlaufskurve 9a in Figur 5).

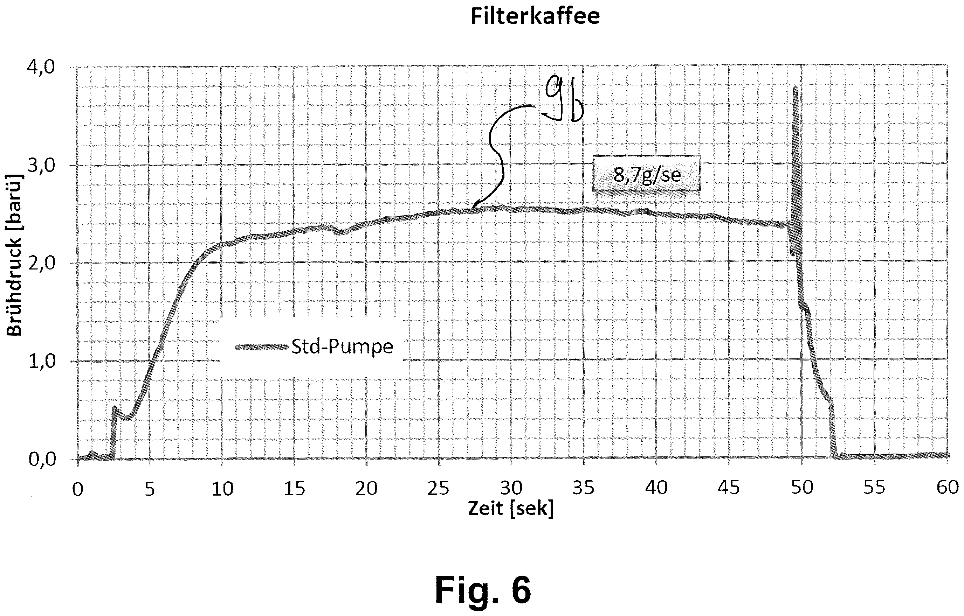

Figur 6 zeigt eine weitere Brühdruckverlaufskurve 9b, die im Speicher der Steuereinrichtung hinterlegt ist, die für Filterkaffee optimiert ist.

Fig. 5 wie Fig. 6 zeigen also Brühungen, bei denen Wasser über eine Schwingankerpumpe gefördert wird. Fig. 5 zeigt eine Druckbrühung bei niedriger Fördermenge bei einer Tasse Cafe Creme (120 ccm). Fig. 6 zeigt eine Filterkaffeebrühung bei niedrigem Druck und hoher Fördermenge (bei einer einem Kaffeebecher entsprechenden Menge von 250 cm³).

Je nach gewähltem Produkt wird eine der Verlaufskurven eingestellt, aus der sich dann eine Zeit bzw. ein Zeitpunkt ergibt, wann es sinnvoll ist, zwischen den Pfaden 3, 4 umzuschalten. Da das Anlaufverhalten der Schwingankerpumpe 5 bekannt ist, muss diese Pumpe nicht zwangsläufig dann zugeschaltet werden, wenn 2.0 bar Druck (entsprechend dem Druck des Hausleitungssystems H) erreicht ist (wobei zuvor der zweite Wasserpfad 4 durch Öffnen des Ventils 6 eröffnet wurde), sondern die Pumpe kann bereits einige Sekunden vorher anlaufen, so dass zum Umschaltzeitpunkt vom Pfad 4 auf den Pfad 3 (zu dem dann der Pfad 4 durch Schließen des Ventils 6 geschlossen wird) die Pumpe 5 bereits auf Druck ist. Ebenso ist eine Steuerung möglich, bei der nach einer vordefinierten Zeit (Umschaltzeitpunkt) vom Parallelbetrieb beider Pfade 3, 4 umgeschaltet wird auf ausschließlichen Pumpenbetrieb (Bypasspfad durch Schließen des Ventils 6 verschlossen). Diese vorbestimmte Zeit kann gemäß des angewählten Produkts, also getränkeproduktabhängig, auf Basis der Brühdruckverlaufskurve dieses Getränks ebenfalls im Speicher der Steuereinrichtung hinterlegt werden. Der in den Brühdruckverlaufskurven gezeigte Brühdruckverlauf ergibt sich durch Verpressen des Kaffeemehls K, so dass dieses Kaffeemehl in der Brühkammer 10 der Brüheinheit 2 dem einfließenden Wasser einen Widerstand entgegensetzt (die Pumpe 5 und/oder der über den Pfad 4 ausgeübte Wasserdruck baut/bauen daher den entsprechenden Druck gegen das verpresste Kaffeemehl K auf).

Bei dem in Figur 6 gezeigten Brühdruckverlauf einer Filterkaffeebrühung ist zu sehen, dass mit der Pumpe 5 der Brühdruck nur unwesentlich (maximal ca. 0.5 bar) über 2 bar ansteigt. Deswegen kann im in Figur 6 gezeigten Fall auch ausschließlich mit dem Wasserpfad 4 über das Ventil 6 gebrüht werden (Pumpe 5 während der gesamten Brühung abgeschaltet). Durch den niedrigeren Brühdruck alleine über den Wasserpfad 4 (also 2.0 bar) kann sich die Zubereitungszeit etwas erhöhen, dafür lässt sich durch den gleichmäßigen Fluss der Crema-Anteil auf dem Filterkaffee deutlich reduzieren, was in der Regel erwünscht ist.

Eine weitere Variante zum Befüllen der Leitungen, zum Steuern des Wasserflusses und zum Umschalten zwischen den Pfaden 3 und 4 (nicht gezeigt) erfolgt ohne Verwendung einer Kennlinie der Fördereinrichtung 5 und ohne Verwenden von Brühdruckverlaufskurven. Diese Steuerung erfolgt auf Basis der folgenden Überlegung. Da das System bzw. die Leitungen des Wasserzulaufs, des Heißwassererzeugers und der Brüheinheit zu Beginn der Brühung mit Luft gefüllt sind und diese Luft (durch nachfließendes Wasser) leichter herausgedrückt wird, als das Wasser durch das Kaffeemehl K fließt, wird zuerst Wasser mit einer höheren Strömungsgeschwindigkeit fließen, das dann anschließend langsamer fließt und den Druck aufbaut. Es ist möglich, mit dem Durchflussmengenmesser 7 zu erfassen, mit welcher Geschwindigkeit Wasser W durch diesen Messer 7 fließt. Wenn diese Geschwindigkeit (bzw. die Durchflussmenge pro Zeiteinheit) unter einen vorbestimmten Grenzwert abfällt, kann vom Betrieb mit zweitem Pfad 4 auf einen reinen Pumpenbetrieb ausschließlich durch den ersten Pfad 3 umgeschaltet werden.

## Patentansprüche

1. Vorrichtung zum Zubereitung eines Getränkes aus einem mit Wasser zu durchströmenden Stoff (K), insbesondere elektrisch betriebene Kaffeemaschine,
mit einem Wasserzulauf (1), über den der Vorrichtung Wasser (W) zuführbar ist und mit dem das zugeführte Wasser (W) in eine Brüheinheit (2) der Vorrichtung leitbar ist, die eine Brühkammer (10) zur Aufnahme des Stoffes (K) und zum Durchströmen desselben mit dem Wasser (W) aufweist,
wobei der Wasserzulauf (1) einen ersten Wasserpfad (3), in dem eine Fördereinrichtung (5), insbesondere eine Wasserpumpe, vorgesehen ist, und einen zweiten Wasserpfad (4), dem Wasser unter Druck zuführbar ist, aufweist, und
wobei sich der erste und der zweite Wasserpfad (3, 4) stromaufwärts der Brüheinheit (2) vereinigen (11), um Wasser (W) aus beiden Wasserpfaden (3, 4) in die Brüheinheit (2) leiten zu können,
***gekennzeichnet durch***
einen im/am zweiten Wasserpfad (4) angeordneten Durchflussmengenregler (6), insbesondere ein Ventil, bevorzugt ein Absperrventil.

2. Vorrichtung nach dem vorhergehenden Anspruch
***dadurch gekennzeichnet, dass***
der Wasserzulauf (1) genau einen Anschluss (1a) zum Zuführen von Wasser unter Druck, bevorzugt aus einem externen Wasserleitungssystem (H), aufweist, wobei sich der Wasserzulauf (1) stromabwärts seines Anschlusses (1a) in seinen ersten Wasserpfad (3) und seinen zweiten Wasserpfad (4) verzweigt.

3. Vorrichtung nach einem der vorhergehenden Ansprüche
***dadurch gekennzeichnet, dass***
der Wasserzulauf (1) und/oder sein zweiter Wasserpfad (4) zum Anschluss (1a, 4a) an ein/das externe(s) Wasserleitungssystem (H), insbesondere an ein Hauswassernetz, ausgebildet ist/sind, zum Zuführen von Wasser unter Druck aus dem externen Wasserleitungssystem (H).

4. Vorrichtung nach einem der vorhergehenden Ansprüche
***dadurch gekennzeichnet, dass***
im Wasserzulauf (1), insbesondere in seinem ersten Wasserpfad (3), ein Durchflussmengenmesser (7) vorgesehen ist.

5. Vorrichtung nach einem der vorhergehenden Ansprüche
***dadurch gekennzeichnet, dass***
die Vorrichtung zwischen mindestens zwei, bevorzugt allen, der folgenden Betriebszustände des Wasserflusses vom Wasserzulauf (1) in die Brüheinheit (2) umschaltbar ist:
• Wasserfluss ausschließlich über den ersten Wasserpfad (3),
• Wasserfluss ausschließlich über den zweiten Wasserpfad (4),
• Wasserfluss sowohl über den ersten Wasserpfad (3) als auch über den zweiten Wasserpfad (4).

6. Vorrichtung nach dem vorhergehenden Anspruch
***dadurch gekennzeichnet, dass***
die Vorrichtung auf Basis einer von einem/dem Durchflussmengenmesser (7) erfassten, momentan im Wasserzulauf (1), insbesondere in dessen erstem Wasserpfad (3), strömenden Wassermenge pro Zeiteinheit umschaltbar ist.

7. Vorrichtung nach Anspruch 5
***dadurch gekennzeichnet, dass***
in der Vorrichtung eine Kennlinie (8) der Fördereinrichtung (5), welche bevorzugt den Zusammenhang zwischen der von der Fördereinrichtung (5) pro Zeiteinheit geförderten Wassermenge einerseits und dem von der Fördereinrichtung (5) aufgebrachten Förderdruck andererseits kennzeichnet, hinterlegt ist und dass die Vorrichtung unter Heranziehen dieser Kennlinie (8) umschaltbar ist.

8. Vorrichtung nach den beiden vorhergehenden Ansprüchen
***dadurch gekennzeichnet, dass***
die Vorrichtung unter Heranziehen der Kennlinie (8) einerseits sowie der von dem Durchflussmengenmesser (7) erfassten, momentan im Wasserzulauf (1), insbesondere in dessen erstem Wasserpfad (3), strömenden Wassermenge pro Zeiteinheit andererseits umschaltbar ist.

9. Vorrichtung nach einem der vier vorhergehenden Ansprüche
***dadurch gekennzeichnet, dass***
in der Vorrichtung eine oder mehrere Brühdruckverlaufskurve(n) (9a, 9b), welche bevorzugt den zeitabhängigen Brühdruckverlauf kennzeichnet/n, hinterlegt ist/sind und dass die Vorrichtung unter Heranziehen dieser Brühdruckverlaufskurve(n) (9a, 9b) umschaltbar ist.

## Claims

1. A device for the preparation of a beverage from a substance (K) to be flowed through by water, in particular an electrically operated coffee machine,
having a water feed (1) via which water (W) can be supplied to the device and with which the supplied water (W) can be conducted into a brewing unit (2) of the device, which brewing unit has a brewing chamber (10) for receiving the substance (K) and for flowing of the water (W) through the latter,
wherein the water feed (1) has a first water path (3) in which there is provided a conveying device (5), in particular a water pump, and a second water path (4) to which pressurized water can be supplied, and
wherein the first and the second water path (3, 4) unite (11) upstream of the brewing unit (2) in order to be able to conduct water (W) from both water paths (3, 4) into the brewing unit (2),
**characterised by**
a flow rate controller (6), in particular a valve, preferably a shut-off valve, arranged in/at the second water path (4).

2. A device according to the preceding claim,
**characterised in that**
the water feed (1) has exactly one connection (1a) for supplying pressurized water, preferably from an external water pipe system (H), wherein the water feed (1) branches downstream of its connection (1a) into its first water path (3) and its second water path (4).

3. A device according to any one of the preceding claims,
**characterised in that**
the water feed (1) and/or its second water path (4) is/are designed for connection (1a, 4a) to a/the external water pipe system (H), in particular to a domestic water mains, to supply pressurized water from the external water pipe system (H).

4. A device according to any one of the preceding claims,
**characterised in that**
a flowmeter (7) is provided in the water feed (1), in particular in its first water path (3).

5. A device according to any one of the preceding claims,
**characterised in that**
the device is switchable between at least two, preferably all, of the following operating states of the water flow from the water feed (1) into the brewing unit (2):
• water flow solely via the first water path (3),
• water flow solely via the second water path (4),
• water flow both via the first water path (3) and via the second water path (4).

6. A device according to the preceding claim,
**characterised in that**
the device is switchable on the basis of a water quantity per unit of time, determined by a/the flowmeter (7) and flowing at the moment in the water feed (1), in particular in its first water path (3).

7. A device according to claim 5,
**characterised in that**
a characteristic curve (8) of the conveying device (5), which characteristic curve preferably characterizes the relationship between on the one hand the water quantity conveyed per unit of time by the conveying device (5) and on the other hand the conveying pressure applied by the conveying device (5), is stored in the device, and **in that** the device can be switched by reference to this characteristic curve (8).

8. A device according to the two preceding claims,
**characterised in that**
the device is switchable by reference to the characteristic curve (8) on the one hand and to the water quantity per unit of time, determined by the flowmeter (7) and flowing at the moment in the water feed (1), in particular in its first water path (3), on the other hand.

9. A device according to any one of the four preceding claims,
**characterised in that**
one or a plurality of brewing pressure course curve(s) (9a, 9b), which preferably characterize(s) the time-dependent brewing pressure course, is/are stored in the device and **in that** the device can be switched by reference to this/these brewing pressure course curve(s) (9a, 9b).

## Revendications

1. Dispositif servant à préparer une boisson à partir d'une substance (K) destinée à être traversée par de l'eau, en particulier machine à café fonctionnant à l'électricité, comprenant :
une arrivée d'eau (1) par le biais de laquelle le dispositif peut être alimenté en eau (W) et au moyen de laquelle l'eau (W) alimentée peut être amenée dans une unité d'infusion (2) du dispositif qui comporte une chambre d'infusion (10) destinée à recevoir la substance (K) et à faire passer l'eau (W) à travers cette dernière,
l'arrivée d'eau (1) comportant un premier trajet d'eau (3) dans lequel est prévu un système de transport (5), en particulier une pompe à eau, et un deuxième trajet d'eau (4) auquel de l'eau peut être amenée sous pression, et
les premier et deuxième trajets d'eau (3, 4) se réunissant (11) en amont de l'unité d'infusion (2) afin de pouvoir amener de l'eau (W) venant des deux trajets d'eau (3, 4) dans l'unité d'infusion (2),
**caractérisé par**
un régulateur de débit (6) disposé dans / sur le deuxième trajet d'eau (4), en particulier un robinet, de préférence un robinet d'arrêt.

2. Dispositif selon la revendication précédente, **caractérisé en ce que** l'arrivée d'eau (1) comporte précisément un raccord (1a) d'alimentation d'eau sous pression, de préférence à partir d'un système de canalisation extérieur (H), l'arrivée d'eau (1) se ramifiant en aval de son raccord (1a) en son premier trajet d'eau (3) et son deuxième trajet d'eau (4).

3. Dispositif selon l'une des revendications précédentes, **caractérisé en ce que** l'arrivée d'eau (1) et/ou son deuxième trajet d'eau (4) est/sont configuré(s) pour se raccorder (1a, 4a) au / à un système de canalisation extérieur (H), en particulier à un réseau d'eau domestique, afin d'amener de l'eau sous pression à partir du système de canalisation extérieur (H).

4. Dispositif selon l'une des revendications précédentes, **caractérisé en ce qu'**un débitmètre (7) est prévu dans l'arrivée d'eau (1), en particulier dans son premier trajet d'eau (3).

5. Dispositif selon l'une des revendications précédentes, **caractérisé en ce que** le dispositif peut être commuté entre au moins deux, de préférence tous les états suivants du flux d'eau allant de l'arrivée d'eau (1) à l'unité d'infusion (2) :
• flux d'eau uniquement par le premier trajet d'eau (3),
• flux d'eau uniquement par le deuxième trajet d'eau (4),
• flux d'eau à la fois par le premier trajet d'eau (3) et le deuxième trajet d'eau (4).

6. Dispositif selon l'une des revendications précédentes, **caractérisé en ce que** le dispositif peut être commuté sur la base d'une quantité d'eau qui s'écoule par unité de temps à un moment donné et qui est détectée par un / le débitmètre (7) dans l'arrivée d'eau (1), en particulier dans son premier trajet d'eau (3).

7. Dispositif selon la revendication 5, **caractérisé en ce qu'**une courbe caractéristique (8) du système de transport (5), laquelle décrit de préférence d'une part la relation entre la quantité d'eau transportée par le système de transport (5) par unité de temps et d'autre part la pression de transport appliquée par le système de transport (5), est mémorisée dans le dispositif et **en ce que** le dispositif peut être commuté en se servant de cette courbe caractéristique (8).

8. Dispositif selon les deux revendications précédentes, **caractérisé en ce que** le dispositif peut être commuté en se servant d'une part de la courbe caractéristique (8) ainsi que, d'autre part, de la quantité d'eau qui s'écoule par unité de temps et qui est détectée par le débitmètre (7) à un moment donné dans l'arrivée d'eau (1), en particulier dans son premier trajet d'eau (3).

9. Dispositif selon l'une des quatre revendications précédentes, **caractérisé en ce qu'**une ou plusieurs courbes de profil de pression d'infusion (9a, 9b), caractérisant de préférence le profil de pression d'infusion en fonction du temps, sont mémorisées dans le dispositif et **en ce que** le dispositif peut être commuté en se servant de cette ou ces courbes de profil de pression d'infusion (9a, 9b).
